# EUROPEAN PATENT APPLICATION

(11) **EP 1 956 490 A2**
(43) Date of publication of application: **13.08.2008**
(21) Application number: 07253704.6
(22) Date of filing: 19.09.2007
(51) Int. Cl.: G06F 12/10

(54) **Managing memory in virtualization system**

(30) Priority: 19.09.2006 JP 2006252287
(71) Applicant: Ricoh Company, Ltd., Tokyo 143-8555 (JP)
(72) Inventor: Noriyuki, Shiota, Ohta-ku Tokyo 143-8555 (JP); Haruo, Shida, Ohta-ku Tokyo 143-8555 (JP); Volmat, Alain, Ohta-ku Tokyo 143-8555 (JP)
(74) Representative: Mounteney, Simon James

(57) **Abstract**

An apparatus, method, system, computer program and product each capable of managing memory in a virtualization system. A selected page of an operating system is loaded into a physical memory when an attempt to access the selected page is detected.

## Description

The present invention generally relates to memory management, and more specifically to an apparatus, method, system, computer program and product each capable of managing memory in a virtualization system.

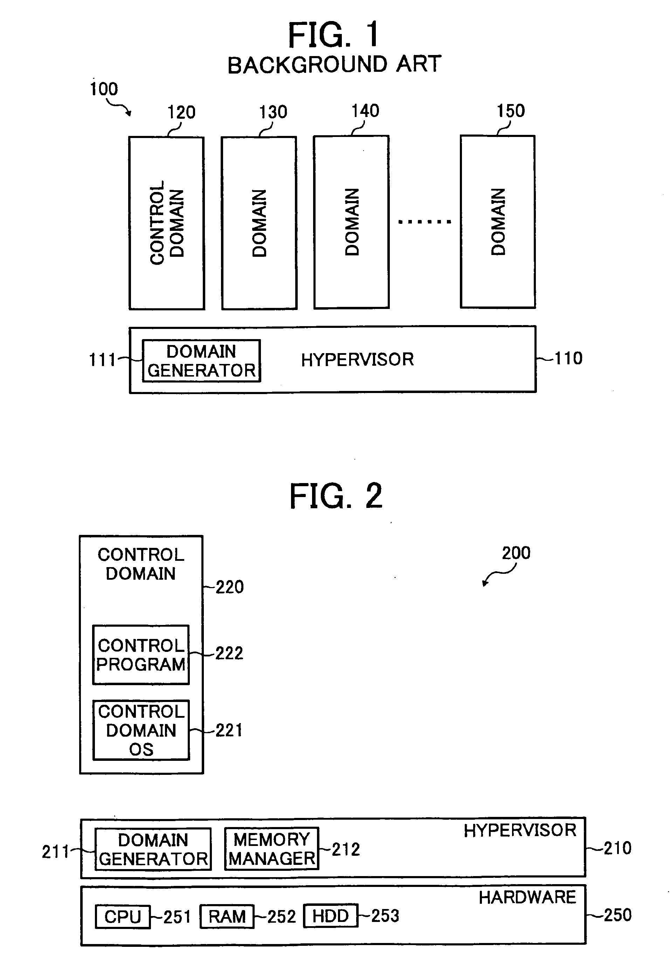

The use of virtual machine software, such as hypervisor software, allows a plurality of domains to simultaneously run on a single physical apparatus. For example, as illustrated in FIG. 1, a virtualization system 100 including a hypervisor 110 may be provided above a hardware platform of the physical apparatus. The hypervisor 110 may create a plurality of domains 130 to 150 in addition to a control domain 120 using a domain generator 111, and cause more than one domain to simultaneously run on the hardware platform of the physical apparatus. Since each one of the plurality of domains 120 to 150 is capable of executing its own operating system, more than one different kind of operating system may be simultaneously executed on one physical apparatus.

However, when more than one domain executes the same operating system, more than one copy of the operating system will be loaded in a physical memory of the physical apparatus, thus the physical memory space is not efficiently used.

An object of the present invention is to provide an apparatus, method, system, computer program and product each capable of managing memory in a virtualization system.

In one example, a virtualization system including a hypervisor may be provided in a physical apparatus. The hypervisor may generate a plurality of domains that simultaneously operate on the physical apparatus including at least two domains each of which may execute an operating system. The hypervisor may generate a page fault exception upon detecting an attempt to access a selected page of the operating system. When it is determined that the selected page is not present in a physical memory of the apparatus, the hypervisor may load the selected page of the operating system from a secondary memory of the apparatus into a flame of the physical memory having a physical address. When it is determined that the selected page is present in the physical memory of the apparatus, the hypervisor may obtain the physical address of the flame of the physical memory to which the selected page is loaded. The hypervisor may store mapping information indicating the correspondence between the selected page of the operating system and the physical address of the flame to which the selected page of the operating system is loaded. Further, the hypervisor may set a state of the selected page of the operating system to a read-only state.

In addition to the above-described example embodiments, the present invention may be practiced in various other ways.

A more complete appreciation of the disclosure and many of the attendant advantages and features thereof can be readily obtained and understood from the following detailed description with reference to the accompanying drawings, wherein:

FIG. 1 is a schematic block diagram illustrating the structure of a virtualization system according to a background art;

FIG. 2 is a schematic block diagram illustrating the structure of a virtualization system according to an example embodiment of the present invention;

FIG. 3 is a schematic block diagram illustrating operation of generating a domain, performed by the virtualization system of FIG. 2, according to an example embodiment of the present invention;

FIG. 4 is a schematic block diagram illustrating operation of executing an operating system provided in the domain, performed by the virtualization system of FIG. 2, according to an example embodiment of the present invention;

FIG. 5 is an illustration showing the correspondence between a page of an operating system and a flame of a physical memory to which the page of the operating system is loaded according to an example embodiment of the present invention;

FIG. 6 is an illustration for explaining operation of allocating physical memory, performed by the virtualization system of FIG. 2, according to an example embodiment of the present invention;

FIG. 7 is a flowchart illustrating operation of allocating physical memory, performed by the virtualization system of FIG. 2, according to an example embodiment of the present invention;

FIG. 8 is an illustration for explaining operation of managing a request for writing into an operating system, performed by the virtualization system of FIG. 2, according to an example embodiment of the present invention;

FIG. 9 is a flowchart illustrating operation of managing a request for writing into an operating system, performed by the virtualization system of FIG. 2, according to an example embodiment of the present invention;

FIG. 10 is an illustration for explaining operation of translating a process from a virtual address to a physical address according to an example embodiment of the present invention;

FIG. 11 is an illustration for explaining operation of updating a page table according to an example embodiment of the present invention; and

FIG. 12 is a schematic block diagram illustrating the structure of a virtualization system provided in a multifunctional apparatus according to an example embodiment of the present invention.

The accompanying drawings are intended to depict example embodiments of the present invention and should not be interpreted to limit the scope thereof. The accompanying drawings are not to be considered as drawn to scale unless explicitly noted.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

Referring now to the drawings, wherein like reference numerals designate identical or corresponding parts throughout the several views, FIG. 2 illustrates the structure of a virtualization system 200 according to an example embodiment of the present invention. The virtualization system 200 includes a hypervisor 210 and a control domain 220, which may be provided above a hardware platform 250 of any desired apparatus.

The hypervisor 210 may be implemented by hypervisor software capable of generating one or more domains to allow more than one domain, or more than one virtual machine, to simultaneously run on the hardware platform 250. The hypervisor 210 includes a domain generator 211 and a memory manager 212. The domain generator 211 generates one or more domains, each of which may run under any desired operating system, upon receiving a request from the control domain 220. The memory manager 212 manages allocation of portions of memory to the operating system of any one of the domains. Additionally, the memory manager 212 may manage information to be used for address translation, such as mapping information indicating the correspondence between a page of the operating system and a flame of a physical memory to which the page of the operating system is loaded.

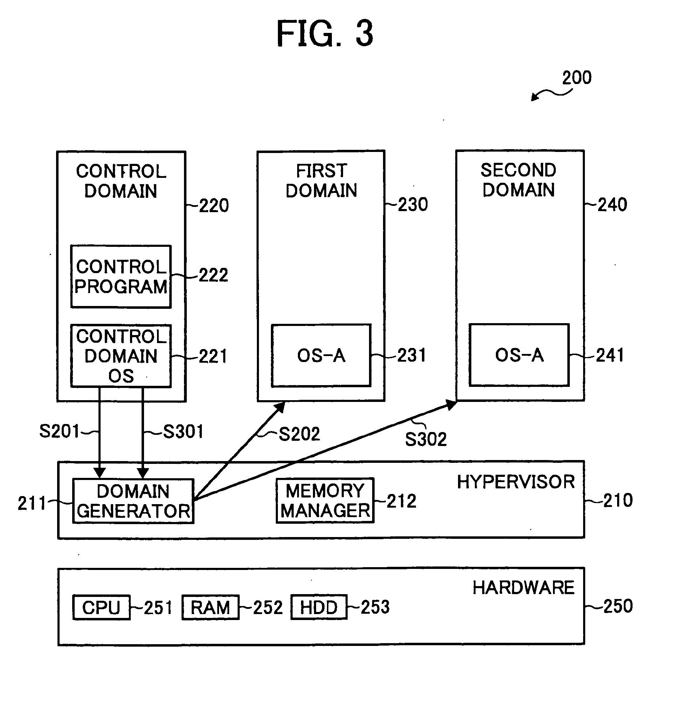

The control domain 220, which is created first by the hypervisor 210 upon activation, includes a control domain OS 221, and a control program 222 that runs under the control domain OS 221. The control domain 220 may cause the hypervisor 210 to create one or more domains as needed by sending a request to the domain generator 211 as described below referring to FIG 3.

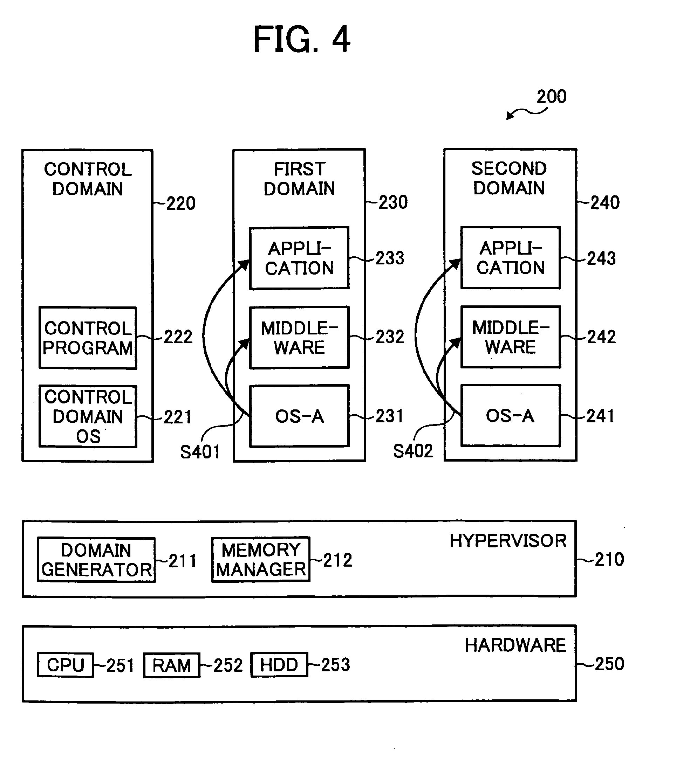

The hardware platform 250 includes any desired kind of hardware resources including, for example, a central processing unit (CPU) 251, a random access memory (RAM) 252, and a hard disk drive (HDD) 253. The CPU 251 may be implemented by any desired kind or any desired number of processor. The RAM 252 may be implemented by any desired kind of volatile or nonvolatile memory. The HDD 253 may be implemented by any desired kind of nonvolatile memory capable of storing a large amount of data. The hardware resources may additionally include an input device, an output device, or a network device, depending on the type of the apparatus. Alternatively, the HDD 253 may be provided outside of the apparatus as long as the HDD 253 is accessible. In this example, the CPU 251, such as a cache memory of the CPU 251, and the RAM 252 may function as a physical memory 410 (FIG 4) or a primary memory of the apparatus, while the HDD 253 may function as a secondary memory 420 (FIG 4) of the apparatus.

Referring now to FIG. 3, operation of creating a first domain 230 and a second domain 240, performed by the virtualization system 200 of FIG 2, is explained according to an example embodiment of the present invention.

In order to create the first domain 230, at S201, the control program 222 sends a request for creating a new domain to the domain generator 211 of the hypervisor 210 via the control domain OS 221. Upon receiving the request, at S202, the domain generator 221 creates the first domain 230, which runs under an operating system A (OS-A) 231. In a substantially similar manner, at S301, the control program 222 sends a request for creating a new domain to the domain generator 221 of the hypervisor 210 via the control domain OS 221. Upon receiving the request, at S302, the domain generator 221 creates the second domain 240, which runs under an operating system A (OS-A) 241. In this example, the OS-A 231 to be executed in the first domain 230 and the OS-A 241 to be executed in the second domain 240 are assumed to be the same operating system. For this reason, the OS-A 231 and the OS-A 241 may be collectively referred to as the "OS-A".

When the OS-A is executed, a process or a task may be started. For example, as illustrated in FIG 4, upon execution of the OS-A 231, at S401, an application process 233 and a middleware 232 may start running under the OS-A 231. Similarly, upon execution of the OS-A 241, at S402, an application process 243 and a middleware 242 may start running under the OS-A 241. When an OS is executed, according to the virtualization system 100 of FIG 1, the OS may be automatically loaded from a secondary memory into a physical memory of the apparatus. However, according to the virtualization system 200 of FIG 4, the hypervisor 210 may manage allocation of the physical memory 410 (FIG. 4) of the apparatus such that the OS-A may be prohibited from being automatically loaded from the secondary memory 420 (FIG 4) into the physical memory 410 upon execution of the OS-A.

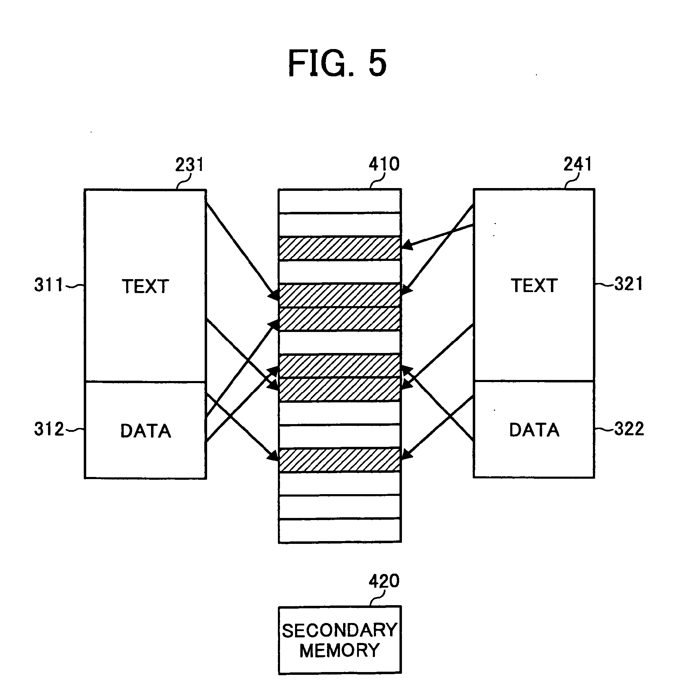

Referring now to FIG 5, operation of managing allocation of the physical memory 410 to the OS-A after execution of the OS-A, performed by the hypervisor 210, is explained according to an example embodiment of the present invention.

In this example, the memory manager 212 of the hypervisor 210 may cause a selected portion of the OS-A 231 to be loaded into the physical memory 410 only when an attempt to access the selected portion of the OS-A 231 is detected. Similarly, the memory manager 212 of the hypervisor 210 may cause a selected portion of the OS-A 241 to be loaded into the physical memory 410 only when an attempt to access the selected portion of the OS-A 241 is detected.

As illustrated in FIG 5, the OS-A 231 of the first domain 230 includes text 311 and data 312. The OS-A 241 of the second domain 240 includes text 321 and data 322. The text may correspond to a plurality of instructions that may be performed by the OS-A, which is not re-writable. The data may correspond to information that may be used by the OS-A, which is re-writable. The OS-A 231 may be divided into a plurality of pages, each page being assigned with a specific domain address located in the first domain 230. Similarly, the OS-A 241 may be divided into a plurality of pages, each page being assigned with a specific domain address located in the second domain 240. Still referring to FIG 5, the physical memory 410 may be divided into a plurality of flames each having the same data size as the page of the OS-A. Under control of the hypervisor 210, a selected page of the OS-A may be loaded into the flame of the physical memory 410 having a specific physical address, which may be assigned by the hypervisor 210, only when the attempt to access the selected page of the OS-A is detected. The memory manager 212 may manage the mapping information indicating the correspondence between the domain address assigned to the page of the OS-A and the physical address to which the page of the OS-A is loaded using a page table, which may be prepared for each domain, for example, as indicated by the arrows in FIG 5. Further, in this example, the page table may have any desired type or structure as long as the correspondence between the page of the OS-A and the flame to which the page of the OS-A is loaded is obtainable.

In order to cause the selected page of the OS-A to be loaded upon detecting the attempt to access the selected page of the OS-A, a page table entry (PTE) of the page table may be previously set to an invalid state. When the PTE corresponding to the domain address of the selected page of the OS-A is accessed, a page fault exception may be generated to invoke the hypervisor 210, while interrupting the current operation of accessing the selected page.

Upon detecting the attempt to access the selected page of the OS-A, or upon detecting the page fault exception, the memory manager 212 of the hypervisor 210 may determine whether the selected page of the OS-A has been loaded from the secondary memory 420 into the physical memory 410, for example, by checking the PTE of the page table that stores flag information indicating whether the selected page is present in the physical memory 410. When it is determined that the selected page of the OS-A has not been loaded, the memory manager 212 assigns the selected page of the OS-A with a flame having a specific physical address, and loads the selected page of the OS-A, which is stored at a specific address of the secondary memory 240, into the assigned flame of the physical memory 410.

Further, in this example, the hypervisor 210 may manage the mapping information indicating the correspondence between the selected page of the OS-A and the flame of the physical memory 410 to which the selected page is loaded. For example, the hypervisor 210 may manage the mapping information indicating the correspondence between the domain address assigned to the selected page of the OS-A and the physical address assigned to the flame to which the selected page of the OS-A is loaded. In the above-described example case, when it is determined that the selected page of the OS-A has not been loaded from the secondary memory 420 into the physical memory 410, the memory manager 212 may update the page table such that the physical address being assigned by the hypervisor 210 is stored in a corresponding manner with the domain address of the selected page of the OS-A.

Alternatively, in the above-described example case, when it is determined that the selected page of the OS-A has been loaded into the physical memory 410, the memory manager 212 may obtain a physical address previously assigned to the flame to which the selected page of the OS-A has been loaded, for example, from the page table. The memory manager 212 may further update the mapping information stored in the page table such that the selected page of the OS-A may be shared by one domain, specifically by associating the physical address being obtained with the domain address of the selected page of the OS-A that is accessed. This prevents the page of the OS-A that has been loaded into the flame of the physical memory 410 to be loaded again into another flame of the physical memory 410.

As described above referring to FIG 5, a selected page of the OS-A may be loaded from the secondary memory 420 into the physical memory 410 only when the attempt to access the selected page of the OS-A is detected. For example, as illustrated in FIG 5, only the pages of the OS-A that have been accessed by the first domain 231 or second domain 241 are loaded from the secondary memory 420 into the corresponding flames (indicated by the hatched area) of the physical memory 410, thus saving the physical memory space.

Further, a selected page of the OS-A may be loaded from the secondary memory 420 into the physical memory 410 only when the selected page of the OS-A is not loaded into a corresponding flame of the physical memory 410. For example, as illustrated in FIG 5, upon detecting the attempt to access the selected page of the OS-A 241 by the second domain 240, the hypervisor 210 determines whether the corresponding page of the OS-A 231 having the same data as the selected page of the OS-A 241 has been loaded into the physical memory 410. When it is determined that the corresponding page of the OS-A 231 has been loaded into the flame of the physical memory 410, the selected page of the OS-A 241 is not loaded from the secondary memory 420 into the physical memory, thus saving the physical memory space. In such case, the physical address of the flame of the physical memory 410 having the corresponding page of the OS-A 231 may be associated with the domain address assigned to the selected page of the OS-A 241. This allows the first domain 231 and the second domain 241 to share one copy of the OS-A.

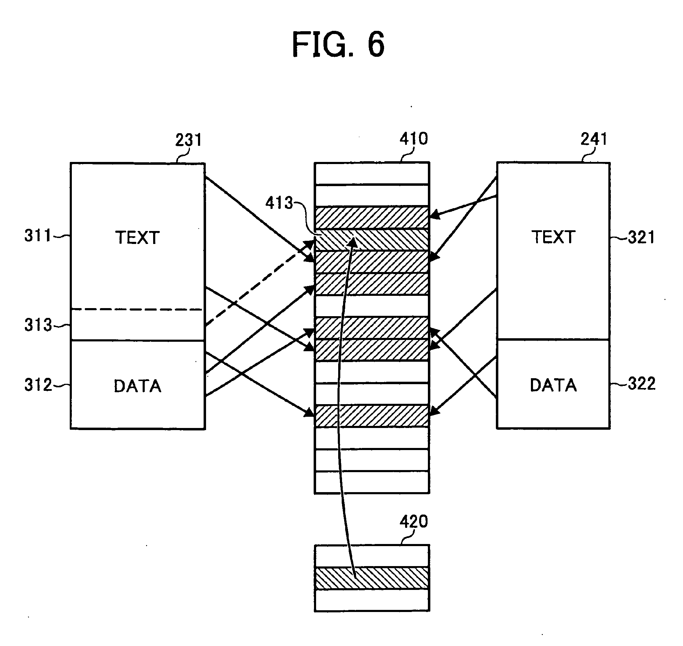

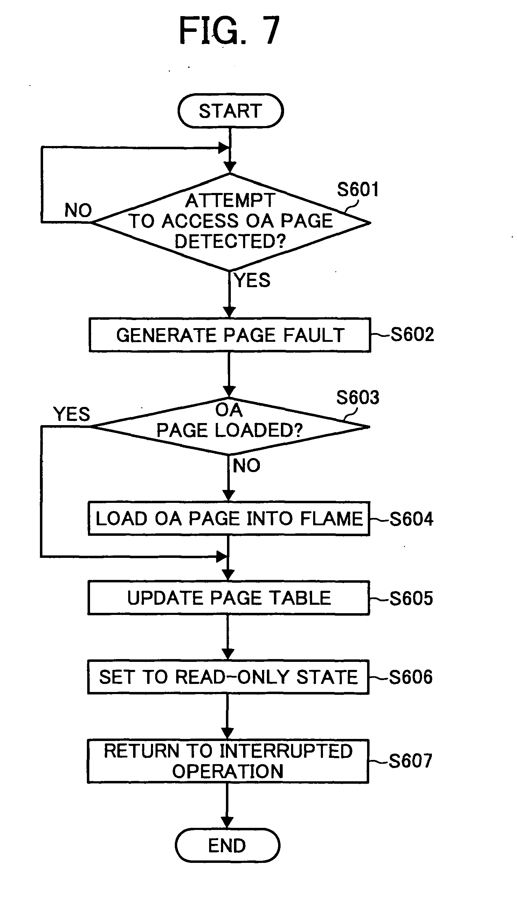

Referring now to FIGS. 6 and 7, operation of allocating the physical memory 410, performed by the virtualization system 200 having the first domain 231 and the second domain 241, is explained according to an example embodiment of the present invention.

Referring to FIG 7, S601 determines whether any attempt to access a selected page of the OS-A 231 is detected, for example, by checking whether the PTE corresponding to the domain address assigned to the selected page of the OS-A 231 is accessed. When the attempt to access the selected page of the OS-A 231 is detected ("YES" at S601), the operation proceeds to S602. For the descriptive purpose, in this example, a page 313 of FIG 6 is selected for access. When the attempt to access the selected page of the OS-A 231 is not detected (''NO'' at S602), the operation repeats S601.

Since the PTE of the page table is previously set to the invalid state, at S602, a page fault exception is generated when the PTE corresponding to the domain address assigned to the page 313 of the OS-A 231 is accessed. When the page fault exception is generated, the hypervisor 210 is invoked while interrupting the operation of accessing the page 313.

S603 determines whether the page 313 has been loaded from the secondary memory 420 into the physical memory 410, for example, by checking the flag information obtainable from the page table. When it is determined that the page 313 has been loaded ("YES" at S603), the operation proceeds to S605. When it is determined that the page 313 has not been loaded ("NO" at S603), the operation proceeds to S604.

S604 assigns the page 313 with a flame 413 (FIG 6) of the physical memory 410 having a specific physical address, and loads the page 313 from the secondary memory 420 into the flame 413 of the physical memory 410. At this time, the hypervisor 210 may set the flag information to indicate that the page 313 has been loaded into the physical memory 410.

At S605, the hypervisor 210 updates the page table with mapping information indicating the correspondence between the page 313 of the OS 231 and the flame 413 of the physical memory 410.

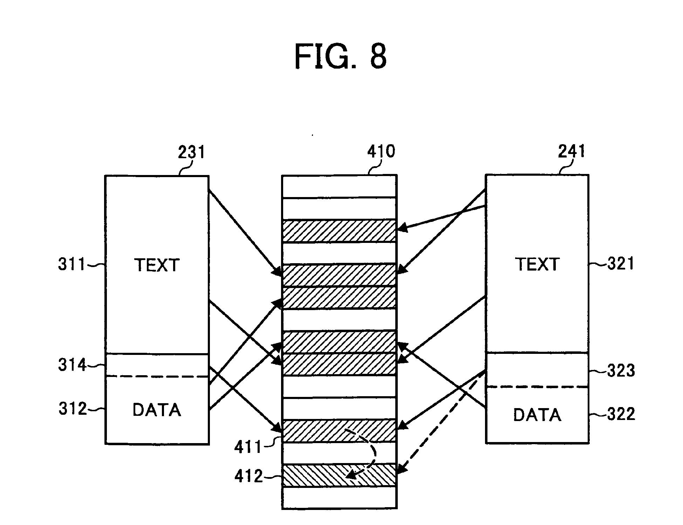

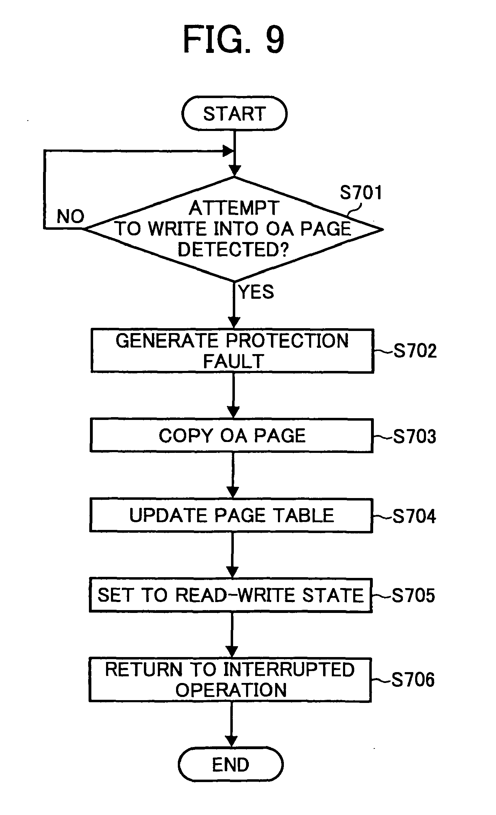

At S606, the hypervisor 210 may set the state of the page 313 to a read-only state, for example, by changing the state of the flag information of the page table. The flag information may indicate whether the page is read only (read-only state) or the page can be read and written into (read-write state). By setting the page 313 to the read-only state, a protection fault exception may be generated when an attempt to write into the page 313 is detected as described below referring to FIGS. 8 and 9.

S607 returns to the interrupted operation to allow the OS-A 231 to access the page 313, and the operation ends.

As described above referring to FIGS. 6 and 7, a selected page of the OS-A may be loaded into the physical memory 410 only when the attempt to access the selected page of the OS-A is detected, and only when the selected page of the OS-A has not been loaded into the physical memory 410. While this may save the physical memory space, sharing the same copy among a plurality of domains may create a problem. For example, the virtualization system 200 may receive a request from any one of the domains 231 and 241 to write into a selected page of the OS-A, which is shared by the domains 231 and 241. In such case, a protection fault exception may be generated to invoke the hypervisor 210 to create another copy of the selected page, for example, as illustrated in FIGS. 8 and 9.

Referring to FIG 9, S701 determines whether any attempt to write into a selected page 323 of the OS-A 241 is detected, for example, by checking whether the PTE corresponding to the domain address assigned to the selected page 323 of the OS-A 241 is accessed for writing. As illustrated in FIG 8, the mapping information indicates that the selected page 323 of the OS-A 241, which has been loaded into a flame 411 of the physical memory 410, is shared by a page 314 of the OS-A 231. Referring back to FIG 9, when the attempt to write into the selected page 323 of the OS-A 241 is detected ("YES" at S701), the operation proceeds to S702. Otherwise ("NO" at S701), the operation repeats S701.

Since the selected page 323 is set to the read-only state, at S702, a protection fault exception is generated to invoke the hypervisor 210, while interrupting the operation of writing into the page 323.

S703 assigns a flame 412 (FIG 8) of the physical memory 410 having a specific physical address, and copies the page 323, which is present in the flame 411, to the flame 412.

S704 updates the page table with the mapping information indicating the correspondence between the page 323 and the flame 412 of the physical memory 410, and the correspondence between the page 314 and the flame 411 of the physical memory 410.

S705 sets the state of the page 323 to a read-write state, for example, by changing the state of the flag information. By setting the page 323 to the read-write state, the page 323 can be written into.

S706 returns to the interrupted operation to allow the OS-A 241 to write into the page 323, and the operation ends.

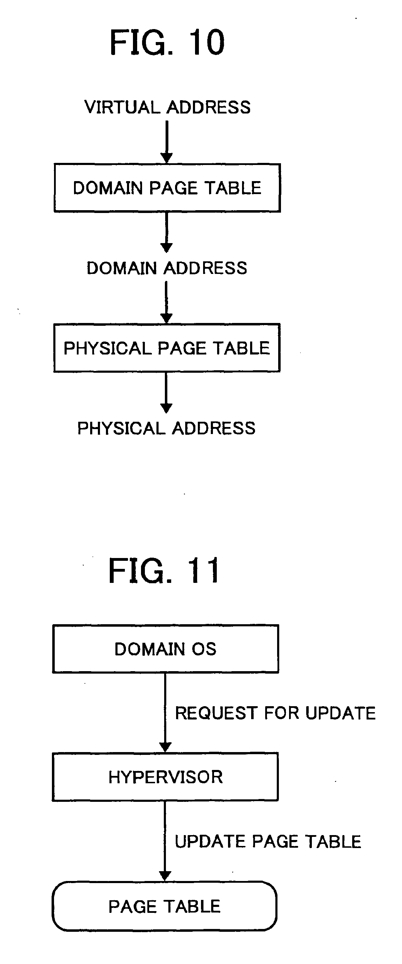

The mapping information, which may be managed by the hypervisor 210, may be used for address translation of a process or a task. Referring now to FIG 10, operation of translating a process or a task from a virtual address to a physical address, performed by the hypervisor 210, is explained according to an example embodiment of the present invention. In this example, as illustrated in FIG 4, any desired application process may run under the OS-A. When the application process attempts to access memory in virtual address, the virtual address needs to be translated into the corresponding physical address via the corresponding domain address.

For example, referring to FIG. 10, upon detecting an attempt to access a virtual address by a process running under the OS-A, the OS-A may convert the virtual address to the corresponding domain address, for example, using a domain page table. The domain page table, which may be prepared for each domain, stores the mapping information indicating the correspondence between a virtual address and a domain address.

Once the domain address is obtained, the hypervisor 210 may convert the domain address to the corresponding physical address, for example, using the page table described above referring to FIG 5 (referred to as the "physical page table" in FIG 10) storing the mapping information indicating the correspondence between a domain address and a physical address.

Using the domain page table in addition to the physical page table, the hypervisor 210 may manage the mapping information indicating the correspondence of a virtual address, domain address, and physical address. For example, based on information obtainable from the domain and physical page tables, the hypervisor 210 may create a CPU page table storing the mapping information indicating the correspondence between the virtual address and the physical address as a CPU page table to be used by the CPU. The mapping information stored in the CPU page table may be managed by the hypervisor 210, for example, as described below referring to FIG 11.

Referring now to FIG 11, operation of updating the CPU page table is explained according to an example embodiment of the present invention.

For example, when a domain page table, or the mapping information indicating the correspondence between the virtual address and the domain address, has been updated, the OS that manages the domain page table generates a hypercall, which requests the hypervisor 210 to update the mapping information stored in the CPU page table. Upon detecting the hypercall, the hypervisor 210 updates the CPU page table with the mapping information obtainable from the OS.

Numerous additional modifications and variations are possible in light of the above teachings. It is therefore to be understood that within the scope of the appended claims, the disclosure of the present invention may be practiced otherwise than as specifically described herein.

For example, elements and/or features of different illustrative embodiments may be combined with each other and/or substituted for each other within the scope of this disclosure and appended claims.

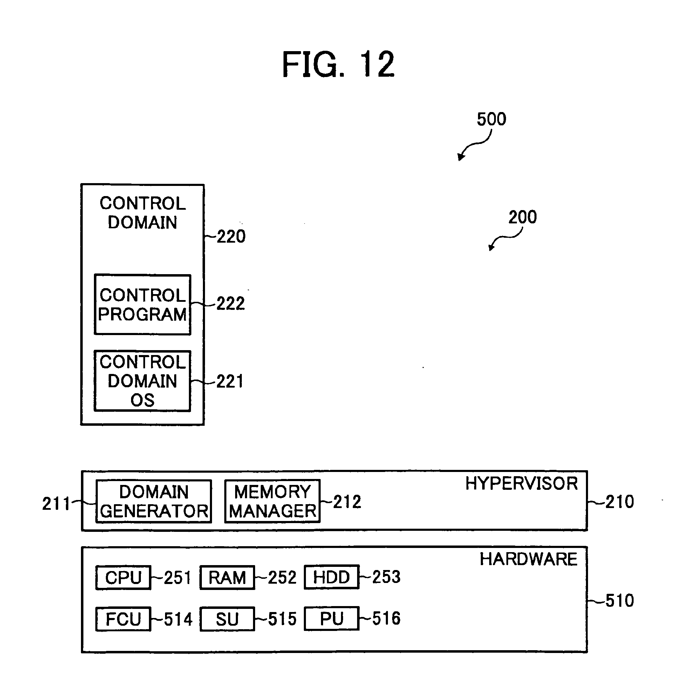

Further, as described above, the virtualization system 200 may be provided in any desired apparatus. Referring now to FIG. 12, the structure of a multifunctional apparatus 500 in which the virtualization system 200 is provided is explained according to an example embodiment of the present invention.

Referring to FIG 12, the multifunctional apparatus 500 includes the virrualization system 200, and a hardware platform 510. The hardware platform 510 includes the CPU 241, the RAM 252, the HDD 253, a fax controller unit (FCU) 514, a scanner unit (SU) 515, and a printer unit (PU) 516. The FCU 514 allows the apparatus 500 to send or receive fax data to or from another apparatus via a communication line. The SU 515 allows the apparatus 500 to scan an original into data. The PU 516 may print out data, which may be obtained within the apparatus 500 or from another apparatus via a network or the communication line, as a printed sheet. Using one or more units of the hardware platform 510, the multifunctional apparatus 500 is capable of performing the functions of scanning, faxing, copying, and printing. In this example, the hypervisor 210 may create one or more domains in addition to the control domain 220, each of which may execute a specific OS, while allowing the effective use of the physical memory space of the apparatus 500. Additionally, the hardware platform 510 may include any desired unit, such as a network controller unit, depending on the functions provided by the multifunctional apparatus 500.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

This patent application is based on and claims priority to Japanese Patent Application No. 2006-252287, filed on September 19, 2006, in the Japanese Patent Office.

## Claims

1. A virtualization system (200) provided with a hypervisor (210), the hypervisor (210) comprising:
means (211) for generating a plurality of domains that simultaneously operate and configured to access a physical memory and a secondary memory, the plurality of domains including at least two domains each configured to execute an operating system;
means (212) for generating a page fault exception upon detecting an attempt to access a selected page of the operating system;
means (212) for loading the selected page of the operating system from the secondary memory into the physical memory when the selected page of the operating system is not present in the physical memory, the selected page being loaded into a flame of the physical memory having a physical address;
means (212) for storing mapping information indicating the correspondence between the selected page of the operating system and the physical address of the flame to which the selected page of the operating system is loaded.

2. The system (200) of claim 1, wherein the hypervisor (210) further comprises:
means (212) for obtaining the physical address of the flame located in the physical memory to which the selected page is loaded when the selected page of the operating system is present in the physical memory.

3. The system (200) of claim 1 or 2, wherein the hypervisor (210) further comprises:
means (212) for setting a state of the selected page of the operating system to a read-only state.

4. The system (200) of claim 3, wherein the hypervisor (210) further comprises:
means (212) for generating a protection fault exception upon detecting an attempt to write into the selected page of the operating system;
means (212) for copying the selected page of the operating system to another flame of the physical memory; and
means (212) for setting the state of the selected page of the operating system to a read/write state.

5. A multifunctional apparatus (500) comprising:
a hardware platform (250; 510) provided with a processor, the physical memory, the secondary memory, and at least one unit configured to perform at least one function selected from scanning, faxing, copying, and printing; and
the hypervisor (210) of any one of claims 1 to 4 provided above the hardware platform.

6. A method of managing memory in a virtualization system, the method comprising:
generating (S202; S302) a plurality of domains that simultaneously operate on a single physical apparatus configured to access a physical memory and a secondary memory, the plurality of domains including at least two domains each configured to execute an operating system;
generating (S602) a page fault exception upon detecting an attempt to access the selected page of the operating system;
determining (S603) whether the selected page is present in the physical memory;
loading (S604) the selected page of the operating system from the secondary memory into the physical memory when the determining determines that the selected page of the operating system is not present in the physical memory, the selected page being loaded into a flame of the physical memory having a physical address;
obtaining (S605) the physical address of the flame of the physical memory to which the selected page is loaded when the determining determines that the selected page of the operating system is present in the physical memory; and
storing (S605) mapping information indicating the correspondence between the selected page of the operating system and the physical address of the flame to which the selected page of the operating system is loaded.

7. The method of claim 6, further comprising:
setting (S606) a state of the selected page of the operating system to a read-only state.

8. The method of claim 7, further comprising:
generating (S702) a protection fault exception upon detecting an attempt to write into the selected page of the operating system;
copying (S703) the selected page of the operating system to another flame of the physical memory; and
setting (S705) the state of the selected page of the operating system to a read/write state.

9. The method of claim 8, further comprising:
upon detecting an attempt to access a virtual address by a process that runs under the operating system, translating the virtual address to a corresponding physical address using the mapping information.

10. A computer readable recording medium including a plurality of computer program instructions, which cause a computer to execute the method of any one of claims 6 to 9.
